# FASCICULE DE BREVET EUROPEEN

(11) **EP 3 254 360 B1**
(45) Date de publication et mention de la délivrance du brevet: **28.10.2020**
(21) Numéro de dépôt: 16705452.7
(22) Date de dépôt: 04.02.2016
(51) Int. Cl.: H02K 5/08, H02K 5/22, H02K 11/33, H02K 5/173, H02K 5/20, H02K 9/19, H02K 15/12, H02K 7/116, H02K 11/00

(54) **ACTIONNEUR DE POSITIONNEMENT ET PROCEDE DE FABRICATION**
STELLANTRIEB UND HERSTELLUNGSVERFAHREN
POSITIONING ACTUATOR AND MANUFACTURING PROCESS

(30) Priorité: 04.02.2015 FR 1550881
(43) Date de publication de la demande: 13.12.2017
(73) Titulaire: MMT SA, 6304 Zug (CH)
(72) Inventeur: SIGG, Daniel, 2605 Sonceboz-sombeval (CH); GRAF, Philip, 2605 Sonceboz-sombeval (CH)
(74) Mandataire: IP Trust
(86) Numéro de dépôt international: PCT/EP2016/052435
(87) Numéro de publication internationale: WO 2016/124715

(56) Documents cités:
- WO-A1-2014/188803
- WO-A2-2010/027447
- WO-A2-2014/090946
- WO-A2-2014/090953
- DE-A1- 4 444 136
- JP-A- 2008 236 840
- US-A1- 2014 021 832
- US-B1- 6 940 194
- US-B2- 7 036 206

## Description

### Domaine de l'invention

La présente invention concerne le domaine des actionneurs électromagnétiques, notamment des actionneurs pour des vannes motorisées. A titre d'exemple, la structure générale d'une telle vanne motorisée est décrite dans le brevet WO2010027447.

Afin d'améliorer la robustesse de tels actionneurs, il est connu d'encapsuler une partie des composants du moteur dans une matière plastique. Ce surmoulage assure un maintien des composants soumis à des vibrations et favorise le transfert thermique. Il permet aussi de supprimer les opérations d'assemblage par vissage ou collage.

### Etat de la technique

On connaît dans l'état de la technique le brevet américain US7036206 décrivant un procédé de surmoulage d'une structure statorique, comprenant une étape de construction d'un ensemble stator intermédiaire, y compris l'assemblage de l'ensemble à bobine sur un noyau de stator ayant un diamètre interne et externe, une étape consistant à disposer l'ensemble stator intermédiaire dans un dispositif de moulage comprenant un demi-couvercle et une moitié d'éjection comprenant un noyau intérieur de l'éjecteur et une plaque mobile, et une étape de chargement d'un roulement dans le dispositif de moulage, et la fermeture de la moitié de la couverture causant la plaque mobile de circuler dans le moule. On injecte ensuite un matériau de fardelage dans le dispositif de moulage pour encapsuler l'ensemble stator intermédiaire et former une structure de stator de moteur surmoulé.

On connaît aussi la demande de brevet WO2010/027447 décrit un actionneur à courant continu sans balais, comprenant un boîtier qui comporte un socle délimitant une cavité destinée à recevoir un ensemble moteur et un capot délimitant une cavité destinée à recevoir un ensemble engrenage. Un ensemble carte à circuit imprimé est mis en place dans le boîtier entre l'ensemble moteur et l'ensemble engrenage. Un arbre de rotor traverse une ouverture ménagée dans l'ensemble carte à circuit imprimé pour s'accoupler à l'ensemble engrenage. Un arbre de sortie s'accouple à l'ensemble engrenage et traverse le capot. Selon un mode de réalisation, un roulement et un élément de retenue de roulement sont montés sur un manchon formé dans le socle de façon à maintenir le rotor dans le boîtier. Selon un autre mode de réalisation, une goupille de retenue de rotor pourvue d'une tête proximale en butée contre le sommet du rotor et d'une extrémité distale filetée ou entaillée traverse le manchon du boîtier de façon à maintenir le rotor dans le boîtier.

La demande de brevet WO2014/090953 décrit une autre solution de moteur à courant continu sans surmoulage du stator.

### Inconvénients de l'art antérieur

Les solutions de l'art antérieur concernent la réalisation d'une structure statorique surmoulée, qui est ensuite assemblée de manière habituelle avec les autres composants du moteur. Elles n'évitent pas les problèmes de vibration avec un nombre importants de sous-ensemble à solidariser et d'évacuation thermique entre les différents composants de l'actionneur, notamment lorsque l'électronique est positionnée proche de l'ensemble statorique et à l'opposé des circuits de refroidissement. Elles nécessitent par ailleurs un nombre important de composants et, généralement, plusieurs joints d'étanchéité, complexifiant l'assemblage.

En particulier, dans la solution proposée par la demande de brevet WO2010/027447, la partie formée par une enveloppe contenant un ensemble statorique, portant des bobines, n'est pas surmoulée mais fixée par des moyens mécaniques non précisés dans la demande, nécessitant un assemblage complexe et une étape de réalisation supplémentaire.

### Solution apportée par l'invention

Afin de remédier à ces inconvénients, la présente invention concerne selon la revendication 1 un actionneur de positionnement comprenant un ensemble statorique et un rotor, un circuit imprimé muni des composants électroniques, ainsi qu'un réducteur pour l'entraînement d'un organe rotatif, ledit actionneur comportant deux blocs complémentaires, le premier bloc étant constitué d'une enveloppe présentant une conductivité thermique supérieure ou égale à 1W/m/K, ledit premier bloc intégrant ledit réducteur et présentant un passage de l'axe de sortie du réducteur ainsi qu'une surface opposée ouverte, ledit second bloc étant constitué par surmoulage de l'ensemble statorique et présentant un logement de roulement arrière du rotor, ledit second bloc présentant une face de jonction complémentaire avec une face de jonction dudit premier bloc, où ledit circuit électronique est positionné dans un espace défini entre lesdits premier et second bloc.

Ainsi, l'assemblage de l'actionneur est simplifié par rapport à l'état de l'art et le circuit électronique peut bénéficier d'une conductivité thermique favorable du premier bloc pour garantir une température de travail acceptable.

Le surmoulage du stator forme le deuxième bloc, qui est ainsi fermé par la surface frontale du surmoulage du stator. Cette solution diffère fondamentalement de l'enseignement du brevet WO2010/027447, qui propose de loger les bobines dans une partie dans laquelle elles sont fixées par des moyens mécaniques non précisés. Cette réalisation ne permet aucunement d'assurer les fonctions thermiques assurées par un bloc intégralement constitué par le surmoulage. Elle va à l'encontre de la simplicité de montage recherchée et ne permet pas d'assurer une bonne insensibilité aux vibrations.

L'actionneur est ainsi constitué par trois composants autonomes :
- un premier bloc à haute conductivité thermique intégrant l'ensemble des composants mécaniques
- un second bloc monolithique, sans pièces en mouvement, constitué par un bloc de matière plastique surmoulant le stator et le connecteur électrique, et présentant le roulement pour guider l'axe du rotor
- un circuit imprimé comportant les composants électroniques et venant se loger dans l'espace prévu à l'interface de ces deux blocs. Ce circuit imprimé est lié mécaniquement et électriquement avec les éléments statoriques et le connecteur électrique du second bloc monolithique.

L'assemblage est extrêmement simple puisque les trois parties ne comportent pas de pièces détachables qu'il faut maintenir pendant l'assemblage (hormis éventuellement le rotor), et sont ensuite assemblées mécaniquement et électriquement par un simple rapprochement de ces trois parties.

Avantageusement, ladite face de jonction dudit second bloc présente une gorge périphérique pour recevoir un joint d'étanchéité apte à venir en appui sur la face complémentaire dudit premier bloc.

Alternativement, c'est le premier bloc qui présente une gorge périphérique pour recevoir un joint d'étanchéité apte à venir en appui sur la face de jonction complémentaire dudit second bloc.

On peut aussi imaginer qu'un joint d'étanchéité soit positionné en appui en regard des faces de jonction des premier et second blocs

Ainsi, l'actionneur ne nécessite qu'une étape d'assemblage où l'on considère les deux ensembles que l'on vient assembler et entre lesquels est positionné un seul joint d'étanchéité.

De préférence, les roulements présents, et particulièrement le roulement du rotor, présentent au moins une gorge recevant un joint annulaire apte à être compressé lors de l'insertion dans ledit logement du second bloc.

De cette manière, l'insertion des roulements intégrant au moins un joint annulaire assure d'une part une étanchéité mais aussi un maintien mécanique d'autre part. Il n'est ainsi pas nécessaire de rajouter une pré-charge au roulement pour éviter la détérioration de l'actionneur lorsque celui-ci est soumis à des vibrations dans l'application.

Selon une variante, ledit premier bloc présente un logement pour recevoir un roulement avant du rotor.

Avantageusement, le roulement avant du rotor présente au moins une gorge recevant un joint annulaire apte à être compressé lors de l'insertion dans ledit logement du premier bloc.

Selon une variante particulière, le premier bloc est réalisé en un matériau de forte conductivité thermique et comporte un circuit de circulation d'un fluide de refroidissement.

Selon un mode de réalisation particulier, la liaison électrique entre les éléments statoriques et le circuit imprimé est réalisée par des broches de connexion surmoulées dans ledit deuxième bloc.

Selon une variante, le deuxième bloc comprend également un connecteur surmoulé.

Avantageusement, ledit deuxième bloc présente un ensemble de connexion formé d'une pluralité de broches présentant une zone de connexion avec un fil électrique prolongée par une broche de connexion avec le circuit imprimé.

Selon une réalisation particulière, ledit ensemble de connexion est présente une pluralité de connecteurs femelles, pour l'insertion et le maintien de broches de connexion entre un fil et une piste du circuit imprimé.

Avantageusement, ledit ensemble de connexion surmoulé présente une collerette pour l'accouplement avec une gaine de protection d'un faisceau de câbles.

De préférence, l'épaisseur du surmoulage de la partie intérieure du stator est supérieure à l'épaisseur du surmoulage de la partie extérieure du stator.

On entend par « partie intérieure » la partie du stator et notamment des bobines situées dans l'espace d'interface entre le premier et second bloc.

Cette caractéristique permet de privilégier les échanges thermiques vers l'extérieur de l'actionneur.

L'invention concerne également un procédé de fabrication d'un ensemble statorique surmoulé pour un actionneur de positionnement selon la revendication 15.

Description détaillée d'un exemple non limitatif de

### réalisation

La présente invention sera mieux comprise à la lecture de la description qui suit, concernant un exemple non limitatif de réalisation se référant aux dessins annexés où :
- la figure 1 représente une vue en coupe d'un actionneur conforme à l'invention,
- la figure 2 représente une vue en perspective de l'actionneur de la figure 1,
- la figure 3 représente une vue en perspective d'une première variante dudit actionneur,
- la figure 4 représente une vue en coupe partielle du mode de réalisation présenté en figure 3,
- la figure 5 représente une vue d'un faisceau surmoulé pouvant être utilisé dans une deuxième variante de l'actionneur,
- la figure 6 représente une vue en perspective de la deuxième variante de l'actionneur,
- les figures 7a à 7c représentent des vues schématiques de différentes jonctions étanches possibles des deux blocs selon l'invention.

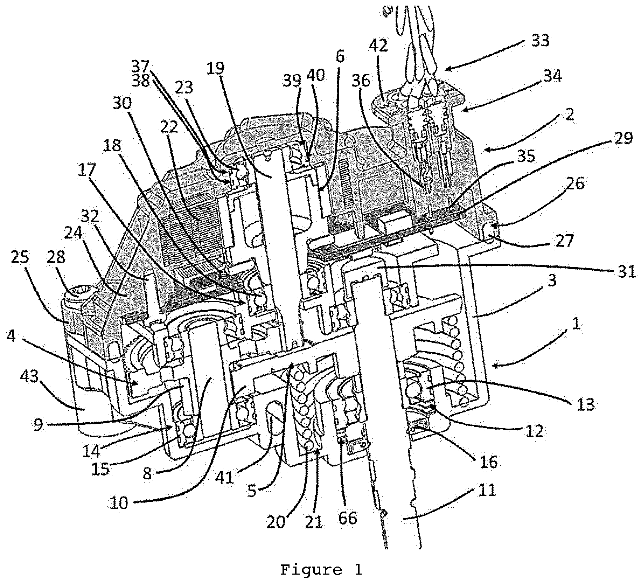

La figure 1 représente un exemple d'actionneur constitué de deux blocs complémentaires (1, 2) raccordés.

Le premier bloc (1) est constitué, dans le présent exemple, par une coque métallique (3) réalisée par fonderie d'aluminium par exemple. Ce premier bloc (1) peut aussi être réalisé dans une matière présentant une bonne conductivité thermique (typiquement supérieure à 1 W/m/K) comme par exemple un plastique chargé de particules de silice ou d'aluminium. Le premier bloc (1) comprend un réducteur formé par un premier étage (4) et un deuxième étage (5). Le premier étage (4) un engrenage menant solidaire du rotor (6) et un engrenage mené (7) supporté par un axe (8) et entraînant un engrenage intermédiaire (9).

Cet engrenage intermédiaire (9) fait partie du deuxième étage (5), et entraîne l'engrenage (10) solidaire de l'arbre de sortie (11).

La coque (3) présente les alésages pour recevoir les roulements, notamment un logement (12) de roulement avant (13) et un second logement (14) de roulement (15) de guidage de l'axe (8). Ces roulements présentent avantageusement au moins une gorge pour recevoir un joint, généralement annulaire. Ce joint assure alors étanchéité et maintien mécanique lorsque le roulement est installé, compressé, dans son logement. Ce dispositif permet ainsi de garantir un maintien sous vibration de l'actionneur sans avoir nécessairement besoin d'un ressort de pré-charge. Sur la figure 1 est montrée une rondelle ressort (66) dans le logement avant (12) sous le roulement (13), au cas où les vibrations appliquées sont particulièrement importantes.

Un joint à lèvre (16) assure l'étanchéité entre l'arbre (11) et la coque (3).

La coque (3) présente également un logement arrière (17) dans lequel est engagé un roulement (18) destiné au guidage de l'arbre moteur (19).

Un ressort (20) assure une pression s'exerçant en la face frontale avant (21) de la coque (3) et l'engrenage (10). Ce ressort assure le retour en position de sécurité « fail-safe » en cas de disfonctionnement de l'actionneur.

Le deuxième bloc (2) comprend un ensemble statorique (22) et un roulement arrière (23) surmoulés dans une masse de plastique thermodurcissable (24) dont la configuration extérieure forme des pattes de fixation (25).

Le roulement arrière (23) présente deux gorges annulaires (37, 38) dans lesquels sont logés des joints élastiques (39, 40) pour assurer l'accrochage mécanique dans la cavité prévue à l'arrière du deuxième bloc (2).

Le roulement arrière (23) peut ainsi être inséré dans le second bloc (2) par une insertion de force selon une direction axiale.

Ce bloc (2) présente une gorge périphérique (26) pour le logement d'un joint (27) assurant la fermeture étanche des deux blocs (1, 2). Cette gorge périphérique (26) pourrait également être prévue sur le premier bloc (1) seulement, ou sur les deux blocs (1, 2).

La liaison mécanique entre les deux blocs (1, 2) est assurée par des vis (28) traversant la patte (25) et se fixant dans un filetage prévue dans le premier bloc (1).

Un circuit imprimé (29) est logé dans l'espace défini entre le bloc (1) et le bloc (2).

Ce circuit imprimé (29) comprend les composants électroniques de pilotage du moteur ainsi que les capteurs (30) détectant la position magnétique du rotor (6). Sur la face opposée, le circuit imprimé (29) comprend un capteur (31) pour la détection de la position angulaire de l'arbre de sortie (11).

Ce circuit imprimé (29) est fixé mécaniquement sur le deuxième bloc (2) par des vis (32). La liaison électrique entre le circuit imprimé (29) et le faisceau de câble (33) est assurée par un connecteur surmoulé (34) intégré dans le second bloc (2). A cet effet, le circuit imprimé (29) présente des perçage étamés pour coopérer avec des connecteurs de type « pressfit » (35) venant eux-mêmes s'engager dans des connecteurs femelles (36) surmoulé dans le second bloc (2). Alternativement, les connecteurs de type « pressfit » (35) peuvent prolonger le connecteur (34) et être directement surmoulés dans le bloc (2).

Le circuit électronique (29) est percé pour permettre le passage de l'arbre (19) du rotor (11).

Le connecteur (34) présente une collerette (42) assurant la protection du faisceau de câble (33)

Dans l'exemple décrit, le premier bloc (1) comprend également un circuit de refroidissement par circulation d'un fluide caloriporteur.

Dans une réalisation particulière, le bloc avant (1) présente un logement pour recevoir l'extrémité d'un faisceau de câble (33) pré-monté, intégrant les connecteurs (36).

A cet effet, le bloc (1) présente une cavité (41) dont les extrémités débouchent à la surface du bloc (1), pour permettre le raccordement à des conduits d'arrivée et de sortie de fluide.

La fixation de l'ensemble est assurée par des colonnes (43) formées dans le premier bloc (1) permettant une liaison par des vis, rivets ou tout autre moyen usuel.

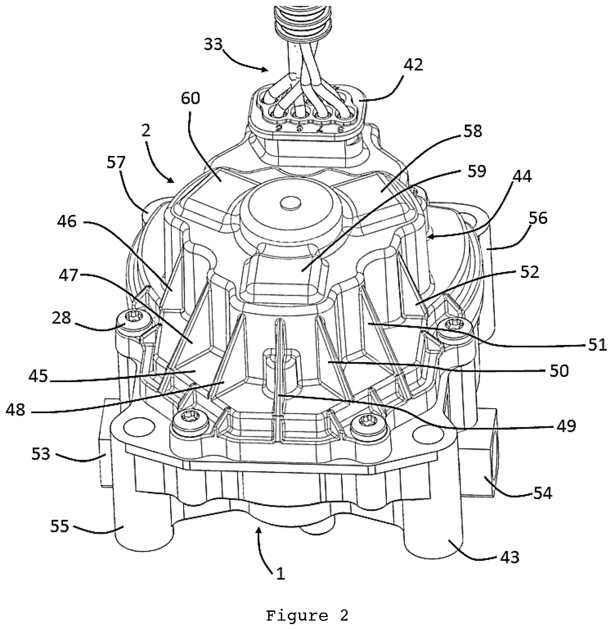

La figure 2 représente une vue extérieure en perspective de l'actionneur.

Le second bloc (2) en matière plastique présente une partie (44) épousant la forme du stator, s'évasant ensuite pour en une deuxième partie (45) s'ouvrant sur la surface de liaison avec le premier bloc (1).

Des raidisseurs (46 à 52) s'étendent entre ces deux parties (44, 45) pour assurer une bonne résistance mécanique, et limiter l'épaisseur du surmoulage.

Les protubérances (58 à 60) correspondent au surmoulage du chignon des bobines du stator.

Le premier bloc (1) présente d'un côté un orifice d'entrée (53) débouchant dans la cavité de refroidissement (41) et du côté opposé un orifice de sortie (54), pour permettre le raccordement à un système de refroidissement par circulation d'un fluide caloriporteur.

La fixation est assurée à l'aide des colonnes (43, 55, 56, 57).

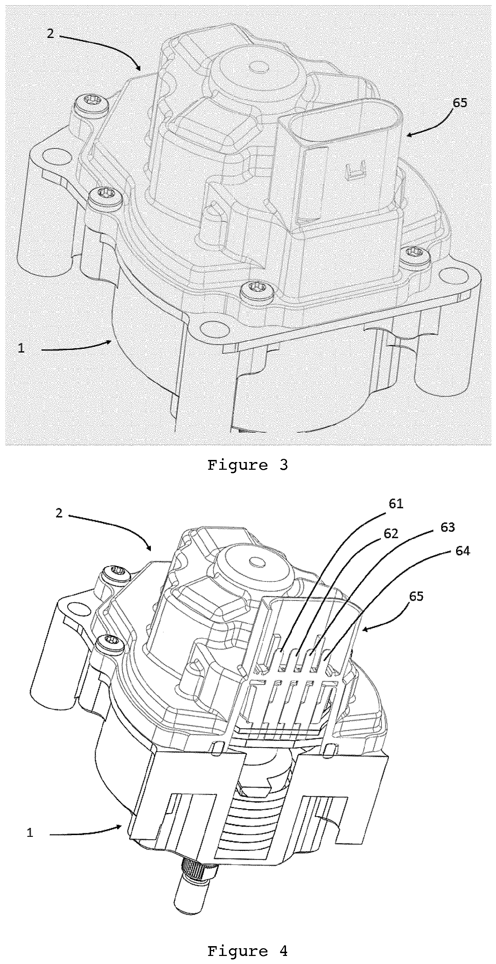

Les figures 3 et 4 représentent une variante de l'invention, respectivement en vue perspective et suivant une coupe partielle selon un plan passant par un connecteur mâle formé par la mise en forme surmoulée du bloc (2).

La connexion est assurée selon cet exemple de réalisation par des broches métalliques (61 à 64) surmoulées dans le second bloc (2). Les extrémités arrière des broches (61 à 64) sont libres pour permettre l'engagement d'un connecteur femelle complémentaire. La section de la partie arrière de cette zone de connexion est complémentaire de la section des connecteurs prolongeant un faisceau de câble.

Les extrémités avant sont configurées pour permettre une insertion sur le circuit imprimé, par exemple par l'intermédiaire de connecteurs femelles « Pressfitt » ou par soudage.

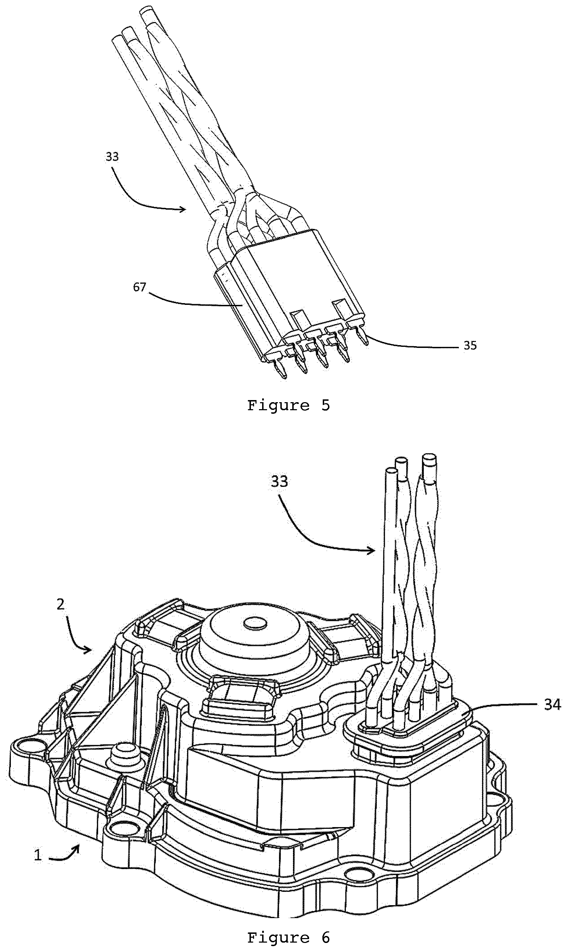

Dans une variante de réalisation, il peut être envisagé de réaliser le faisceau de câble (33) à part du moteur, et directement relié, par un surmoulage (67), aux connecteurs de type « pressift » (35). Ce faisceau surmoulé est présenté en figure 5. Il se destine à un deuxième mode de réalisation de l'actionneur, comme présenté en figure 6, où le connecteur moulé (34) est destiné à recevoir directement, par simple insertion mécanique et éventuellement collage ou soudage, ce faisceau (33) surmoulé.

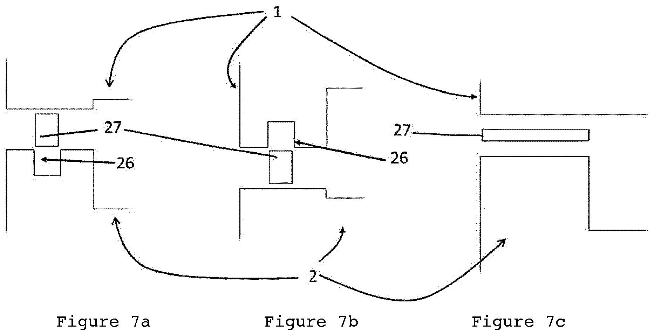

L'étanchéité entre les deux blocs (1) et (2) peut être réalisée de plusieurs manières comme on peut le voir schématiquement représenté en vues de coupe en figures 7a à 7c. En figure 7a, le bloc (2) présente une gorge (26) destinée à recevoir un joint (27) apte à venir en appui sur la face de jonction complémentaire du bloc (1). En figure 7b, c'est le bloc (1) qui présente une gorge (26) destinée à recevoir un joint (27) apte à venir en appui sur la face de jonction complémentaire du bloc (2). En figure 7c, un joint large type « joint de culasse » est simplement positionné entre les deux blocs (1) et (2).

L'invention concerne aussi un procédé de fabrication d'un tel actionneur, consistant à préparer séparément trois composants :
- un premier bloc (1) intégrant ledit réducteur (4, 5) et présentant un passage de l'axe de sortie (11) du réducteur (4, 5) ainsi qu'une surface opposée ouverte,
- un second bloc (2) étant constitué par surmoulage de l'ensemble statorique (22) et présentant un logement de roulement arrière (23) du rotor, ledit second bloc (2) présentant une face de jonction complémentaire avec une face de jonction dudit premier bloc (1),
- un circuit électronique (29), présentant des perçages étamés complémentaires à des connecteurs surmoulés dans le second bloc.

Le deuxième bloc est réalisé par le surmoulage de l'ensemble statorique pour former une pièce monolithique présentant un passage axial débouchant d'un coté seulement, le fond de cette pièce formant un logement pour la mise en place d'un roulement.

L'assemblage se fait par appui du circuit imprimé sur le deuxième bloc afin d'assurer la liaison électrique et mécanique. On dépose ensuite un joint dans la gorge périphérique (26) et rapproche ensuite le premier bloc de ces deux composants déjà assemblés, afin de finaliser l'assemblage. Les vis (28) assurent la liaison entre les blocs et le cas échéant le montage sur un équipement complémentaire.

## Revendications

1. Actionneur de positionnement comprenant un ensemble statorique (22) et un rotor (6), un circuit imprimé (29) muni des composants électroniques, ainsi qu'un réducteur (4, 5) pour l'entraînement d'un organe rotatif comprenant deux blocs complémentaires (1, 2), le premier bloc (1) étant constitué d'une enveloppe présentant une conductivité thermique supérieure ou égale à 1W/m/K,
- ledit premier bloc (1) intégrant ledit réducteur (4, 5) et présentant un passage de l'axe de sortie (11) du réducteur (4, 5) ainsi qu'une surface opposée ouverte,
- ledit second bloc (2) étant intégralement constitué par surmoulage de l'ensemble statorique (22) et présentant un logement de roulement arrière (23) du rotor, (6), ledit second bloc (2) présentant une face de jonction complémentaire avec une face de jonction complémentaire dudit premier bloc (1),
ledit circuit électronique (29) étant positionné dans un espace défini entre lesdits premier (1) et second bloc (2),
le circuit imprimé (29) comprenant les composants électroniques de pilotage du moteur ainsi que les capteurs (30) détectant la position magnétique du rotor (6),
le circuit imprimé (29) comprenant sur la face opposée un capteur (31) pour la détection de la position angulaire de l'arbre de sortie (11).

2. Actionneur de positionnement selon la revendication 1 **caractérisé en ce que** ladite face de jonction complémentaire dudit second bloc (2) présente une gorge périphérique (26) pour recevoir un joint d'étanchéité (27) apte à venir en appui sur la face de jonction complémentaire dudit premier bloc (1).

3. Actionneur de positionnement selon la revendication 1 **caractérisé en ce que** ladite face de jonction complémentaire dudit premier bloc (1) présente une gorge périphérique (26) pour recevoir un joint d'étanchéité (27) apte à venir en appui sur la face de jonction complémentaire dudit second bloc (2).

4. Actionneur de positionnement selon la revendication 1 **caractérisé en ce qu'**un joint d'étanchéité (27) est positionné en appui en regard des faces de jonction complémentaire du premier (1) et second bloc (2).

5. Actionneur de positionnement selon la revendication 1 **caractérisé en ce qu'**il comprend plusieurs roulements (13, 23) et **en ce que** au moins le roulement arrière (23) du rotor présente au moins une gorge (37, 38) recevant un joint annulaire (39, 40) apte à être compressé lors de l'insertion dans ledit logement du second bloc (2).

6. Actionneur de positionnement selon la revendication 1 **caractérisé en ce que** ledit premier bloc (1) présente un logement (12) pour recevoir un roulement avant (13) du rotor.

7. Actionneur de positionnement selon la revendication 6 **caractérisé en ce que** le roulement avant (13) du rotor ; (6) présente au moins une gorge recevant un joint annulaire apte à être compressé lors de l'insertion dans ledit logement (12) du premier bloc (1).

8. Actionneur de positionnement selon l'une au moins des revendications précédentes **caractérisé en ce que** le premier bloc (1) est réalisé en un matériau de forte conductivité thermique et comporte un circuit de circulation (41) d'un fluide de refroidissement.

9. Actionneur de positionnement selon l'une au moins des revendications précédentes **caractérisé en ce que** la liaison électrique entre les éléments statoriques et le circuit imprimé (29) est réalisé par des broches de connexion (36) surmoulées dans ledit deuxième bloc (2).

10. Actionneur de positionnement selon l'une au moins des revendications précédentes **caractérisé en ce que** le second bloc (2) comprend également un connecteur (34) surmoulé.

11. Actionneur de positionnement selon l'une au moins des revendications précédentes **caractérisé en ce que** ledit second bloc (2) présente un ensemble de connexion formé d'une pluralité de broches (36) présentant une zone de connexion avec un fil électrique prolongée par une broche de connexion avec le circuit imprimé (29).

12. Actionneur de positionnement selon la revendication 11 **caractérisé en ce que** ledit ensemble de connexion (36) présente une pluralité de connecteurs femelles, pour l'insertion et le maintien de broches de connexion entre un fil et une piste du circuit imprimé (29).

13. Actionneur de positionnement selon l'une au moins des revendications précédentes **caractérisé en ce que** ledit ensemble de connexion surmoulé présente une collerette (42) pour l'accouplement avec une gaine de protection d'un faisceau de câbles.

14. Actionneur de positionnement selon l'une au moins des revendications précédentes **caractérisé en ce que** l'épaisseur du surmoulage de la partie intérieure du stator est supérieure à l'épaisseur du surmoulage de la partie extérieure du stator.

15. Procédé de fabrication d'un actionneur de positionnement selon l'une au moins des revendications précédentes, consistant à préparer séparément trois composants :
- un premier bloc (1) intégrant ledit réducteur (4, 5) et présentant un passage de l'axe de sortie (11) du réducteur (4, 5) ainsi qu'une surface opposée ouverte,
- un second bloc (2) étant intégralement constitué par surmoulage de l'ensemble statorique (22) et présentant un logement de roulement arrière (23) du rotor, (6) ledit second bloc (2) présentant une face de jonction complémentaire avec une face de jonction complémentaire dudit premier bloc (1),
- un circuit électronique (29), présentant des perçages étamés complémentaires à des connecteurs surmoulés dans le second bloc, (2)
- le second bloc (2) étant réalisé par le surmoulage de l'ensemble statorique (22) pour former une pièce monolithique présentant un passage axial débouchant d'un côté seulement, le fond de cette pièce formant un logement pour la mise en place d'un roulement, (13,23),
- l'assemblage se faisant par appui du circuit imprimé (29) sur le second bloc (2) afin d'assurer la liaison électrique et mécanique,
- la finalisation de l'actionneur se faisant par le dépôt d'un joint dans la gorge périphérique (26) et le rapprochement du premier bloc (1) de ces deux composants déjà assemblés, les vis (28) assurant la liaison entre les blocs. (1, 2)

## Patentansprüche

1. Positionierungsaktuator, umfassend eine Statoreinheit (22) und einen Rotor (6), eine Leiterplatte (29), die mit den elektronischen Bauteilen versehen ist, sowie ein Reduzierstück (4, 5) für den Antrieb eines Drehelements, das zwei komplementäre Blöcke (1, 2) umfasst, wobei der erste Block (1) aus einem Gehäuse mit einer Wärmeleitfähigkeit größer oder gleich 1 W/m/K besteht,
- wobei der erste Block (1) das Reduzierstück (4, 5) enthält und einen Durchgang für die Ausgangsachse (11) des Reduzierstücks (4, 5) sowie eine offene gegenüberliegende Fläche aufweist,
- wobei der zweite Block (2) einstückig durch Umspritzen der Statoreinheit (22) gebildet ist und ein Gehäuse für das hintere Lager (23) des Rotors (6) aufweist, wobei der zweite Block (2) eine Verbindungsfläche aufweist, die komplementär zu einer komplementären Verbindungsfläche des ersten Blocks (1) ist, wobei die Leiterplatte (29) in einem zwischen dem ersten (1) und dem zweiten Block (2) definierten Raum angeordnet ist, wobei die Leiterplatte (29) die elektronischen Bauteile zum Antrieb des Motors sowie die Sensoren (30) zur Erfassung der magnetischen Position des Rotors (6) umfasst, wobei die Leiterplatte (29) auf der gegenüberliegenden Seite einen Sensor (31) zur Erfassung der Winkelposition der Ausgangsachse (11) umfasst.

2. Positionierungsaktuator nach Anspruch 1, **dadurch gekennzeichnet, dass** die komplementäre Verbindungsfläche des zweiten Blocks (2) eine Umfangsnut (26) zur Aufnahme einer Dichtung (27) aufweist, die sich auf der komplementären Verbindungsfläche des ersten Blocks (1) abstützen lässt.

3. Positionierungsaktuator nach Anspruch 1, **dadurch gekennzeichnet, dass** die komplementäre Verbindungsfläche des ersten Blocks (1) eine Umfangsnut (26) zur Aufnahme einer Dichtung (27) aufweist, die sich auf der komplementären Verbindungsfläche des zweiten Blocks (2) abstützen lässt.

4. Positionierungsaktuator nach Anspruch 1, **dadurch gekennzeichnet, dass** die Dichtung (27) an den komplementären Verbindungsflächen des ersten (1) und zweiten (2) Blocks abgestützt ist.

5. Positionierungsaktuator nach Anspruch 1, **dadurch gekennzeichnet, dass** er mehrere Lager (13, 23) umfasst und dass mindestens das hintere Lager (23) des Rotors mindestens eine Nut (37, 38) aufweist, die eine ringförmige Dichtung (39, 40) aufnimmt, die sich beim Einführen in das Gehäuse des zweiten Blocks (2) zusammendrücken lässt.

6. Positionierungsaktuator nach Anspruch 1, **dadurch gekennzeichnet, dass** der erste Block (1) ein Gehäuse (12) zur Aufnahme eines vorderen Lagers (13) des Rotors aufweist.

7. Positionierungsaktuator nach Anspruch 6, **dadurch gekennzeichnet, dass** das vordere Lager (13) des Rotors (6) mindestens eine Nut aufweist, die eine ringförmige Dichtung aufnimmt, die sich beim Einführen in das Gehäuse (12) des ersten Blocks (1) zusammendrücken lässt.

8. Positionierungsaktuator nach mindestens einem der vorhergehenden Ansprüche, **dadurch gekennzeichnet, dass** der erste Block (1) aus einem Material hoher Wärmeleitfähigkeit hergestellt ist und einen Zirkulationskreislauf (41) für ein Kühlfluid umfasst.

9. Positionierungsaktuator nach mindestens einem der vorhergehenden Ansprüche, **dadurch gekennzeichnet, dass** die elektrische Verbindung zwischen den Statorelementen und der Leiterplatte (29) durch Verbindungsstifte (36) hergestellt wird, die in dem zweiten Block (2) umspritzt sind.

10. Positionierungsaktuator nach mindestens einem der vorhergehenden Ansprüche, **dadurch gekennzeichnet, dass** der zweite Block (2) auch einen umspritzten Verbinder (34) umfasst.

11. Positionierungsaktuator nach mindestens einem der vorhergehenden Ansprüche, **dadurch gekennzeichnet, dass** der zweite Block (2) eine Verbindungsanordnung aufweist, die aus mehreren Stiften (36) besteht, die einen Verbindungsbereich mit einem Elektrokabel aufweisen, der durch einen Stift zur Verbindung mit der Leiterplatte (29) verlängert ist.

12. Positionierungsaktuator nach Anspruch 11, **dadurch gekennzeichnet, dass** die Verbindungsanordnung (36) mehrere Buchsenverbinder zum Einführen und Halten von Verbindungsstiften zwischen einem Draht und einer Leiterplattenbahn (29) aufweist.

13. Positionierungsaktuator nach mindestens einem der vorhergehenden Ansprüche, **dadurch gekennzeichnet, dass** die umspritzte Verbindungsanordnung einen Kragen (42) zur Kopplung mit einem Schutzmantel eines Kabelbaums aufweist.

14. Positionierungsaktuator nach mindestens einem der vorhergehenden Ansprüche, **dadurch gekennzeichnet, dass** die Dicke der Umspritzung des inneren Teils des Stators größer ist als die Dicke der Umspritzung des äußeren Teils des Stators.

15. Verfahren zur Herstellung eines Positionierungsaktuators nach mindestens einem der vorhergehenden Ansprüche, bestehend in der separaten Herstellung von drei Komponenten:
- einem ersten Block (1), der das Reduzierstück (4, 5) enthält und einen Durchgang für die Ausgangsachse (11) des Reduzierstücks (4, 5) sowie eine offene gegenüberliegende Fläche aufweist,
- einem zweiten Block (2), der einstückig durch Umspritzen der Statoreinheit (22) gebildet ist und ein Gehäuse für das hintere Lager (23) für den Rotor (6) aufweist, wobei der zweite Block (2) eine Verbindungsfläche aufweist, die komplementär zu einer komplementären Verbindungsfläche des ersten Blocks (1) ist,
- einer Leiterplatte (29), mit verzinnten Bohrungen, die komplementär zu den im zweiten Block (2) umspritzten Verbindern sind,
- wobei der zweite Block (2) durch Umspritzen der Statoreinheit (22) hergestellt wird, um ein monolithisches Teil mit einer axialen Durchgangsöffnung auf nur einer Seite zu bilden, wobei die Unterseite dieses Teils ein Gehäuse für den Einbau eines Lagers (13, 23) bildet,
- wobei die Montage durch Abstützen der Leiterplatte (29) gegen den zweiten Block (2) erfolgt, um die elektrische und mechanische Verbindung zu gewährleisten,
- wobei die Fertigstellung des Aktuators durch Einlegen einer Dichtung in die Umfangsnut (26) und Zusammenfügen des ersten Blocks (1) dieser beiden bereits zusammengebauten Komponenten erfolgt, wobei die Schrauben (28) die Verbindung zwischen den Blöcken sicherstellen. (1, 2).

## Claims

1. Positioning actuator comprising a stator assembly (22) and a rotor (6), a printed circuit (29) provided with electronic components, and a reduction gear (4, 5) for driving a rotary member comprising two complementary blocks (1, 2), the first block (1) consisting of a shell having a thermal conductivity greater than or equal to 1 W/m/K,
- said first block (1) integrating said reduction gear (4, 5) and having a passage for the output shaft (11) of the reduction gear (4, 5), and an open opposite surface,
- said second block (2) being integrally formed by overmolding the stator assembly (22) and having a rear-bearing housing (23) of the rotor (6), said second block (2) having a joining face which is complementary with a complementary joining face of said first block (1),
said electronic circuit (29) being positioned in a space defined between said first (1) and second block (2), the printed circuit (29) comprising the electronic components for controlling the engine, and the sensors (30) detecting the magnetic position of the rotor (6), the printed circuit (29) comprising, on the opposite face, a sensor (31) for detecting the angular position of the output shaft (11).

2. Positioning actuator according to claim 1, **characterized in that** said complementary joining face of said second block (2) has a peripheral groove (26) for receiving a seal (27) capable of abutting the complementary joining face of said first block (1).

3. Positioning actuator according to claim 1, **characterized in that** said complementary joining face of said first block (1) has a peripheral groove (26) for receiving a seal (27) capable of abutting the complementary joining face of said second block (2).

4. Positioning actuator according to claim 1, **characterized in that** a seal (27) is positioned in abutment facing the complementary joining faces of the first (1) and second block (2).

5. Positioning actuator according to claim 1, **characterized in that** it comprises a plurality of bearings (13, 23) and **in that** at least the rear bearing (23) of the rotor has at least one groove (37, 38) receiving an annular seal (39, 40) capable of being compressed during insertion into said housing of the second block (2).

6. Positioning actuator according to claim 1, **characterized in that** said first block (1) has a housing (12) for receiving a front bearing (13) of the rotor.

7. Positioning actuator according to claim 6, **characterized in that** the front bearing (13) of the rotor (6) has at least one groove receiving an annular seal capable of being compressed during insertion into said housing (12) of the first block (1).

8. Positioning actuator according to at least one of the preceding claims, **characterized in that** the first block (1) is made of a material, which has a high thermal conductivity, and comprises a circulation circuit (41) for a cooling fluid.

9. Positioning actuator according to at least one of the preceding claims, **characterized in that** the electrical link between the stator elements and the printed circuit (29) is produced by connection pins (36) overmolded in said second block (2).

10. Positioning actuator according to at least one of the preceding claims, **characterized in that** the second block (2) also comprises an overmolded connector (34).

11. Positioning actuator according to at least one of the preceding claims, **characterized in that** said second block (2) has a connection assembly formed by a plurality of pins (36) having a connection zone with an electric wire extended by a pin for connecting with the printed circuit (29).

12. Positioning actuator according to claim 11, **characterized in that** said connection assembly (36) has a plurality of female connectors for inserting and holding connection pins between a wire and a track of the printed circuit (29).

13. Positioning actuator according to at least one of the preceding claims, **characterized in that** said overmolded connection assembly has a collar (42) for coupling with a protective sheath of a bundle of cables.

14. Positioning actuator according to at least one of the preceding claims, **characterized in that** the thickness of the overmolding of the inner part of the stator is greater than the thickness of the overmolding of the outer part of the stator.

15. Method for manufacturing a positioning actuator according to at least one of the preceding claims, consisting in separately preparing three components:
- a first block (1) integrating said reduction gear (4, 5) and having a passage for the output shaft (11) of the reduction gear (4, 5), and an open opposite surface,
- a second block (2) being integrally formed by overmolding the stator assembly (22) and having a rear-bearing housing (23) of the rotor (6), said second block (2) having a joining face which is complementary with a complementary face joining of said first block (1),
- an electronic circuit (29) having tin-plated through-holes which are complementary to connectors overmolded into the second block (2),
- the second block (2) being produced by overmolding the stator assembly (22) in order to form a monobloc part having an axial passage opening out on one side only, the bottom of this part forming a housing for the installation of a bearing (13, 23),
- the assembly being made by the printed circuit (29) abutting the second block (2) in order to ensure the electrical and mechanical link,
- the finalization of the actuator being carried out by depositing a seal in the peripheral groove (26) and bringing the first block (1) closer to these two components which are already assembled, the screws (28) ensuring the link between the blocks (1, 2).
